# EUROPÄISCHE PATENTANMELDUNG

(11) **EP 2 716 987 A2**
(43) Veröffentlichungstag der Anmeldung: **09.04.2014**
(21) Anmeldenummer: 13187329.1
(22) Anmeldetag: 04.10.2013
(51) Int. Cl.: F24F 11/00

(54) **Steuerung für einen Raumlüfter, Lüftungssystem und Fenster mit Raumlüfter**

(30) Priorität: 05.10.2012 AT 10802012
(71) Anmelder: IFN-Holding AG, 4050 Traun (AT)
(72) Erfinder: Hochreiter, Herbert, 4048 Puchenau (AT)
(74) Vertreter: Burger, Hannes

(57) **Zusammenfassung**

Es wird eine Steuerung (1) für einen Raumlüfter (2) angegeben, welcher Mittel (3) zur Bestimmung der Anwesenheit von Personen umfasst, wobei die Steuerung (1) dazu eingerichtet ist, die maximale Lüfterleistung nur dann einzustellen, wenn im Bereich des Lüfters (2), insbesondere im gesamten Raum, keine anwesenden Personen festgestellt werden. Weiterhin wird ein Lüftungssystem mit einem Lüfter (2) und einer damit verbundenen Steuerung (1) der genannten Art, ein Fenster (5) mit einem Lüfter (2) und einer damit verbundenen Steuerung (1) der genannten Art, sowie ein Verfahren zur Lüftung eines Raums angegeben.

## Beschreibung

Die Erfindung betrifft eine Steuerung für einen Raumlüfter, umfassend Mittel zur Bestimmung der Anwesenheit von Personen. Des Weiteren betrifft die Erfindung ein Lüftungssystem, umfassend einen Raumlüfter und eine damit verbundene Steuerung der genannten Art. Zudem betrifft die Erfindung auch ein Fenster, umfassend einen Raumlüfter und eine damit verbundene Steuerung der genannten Art. Schließlich betrifft die Erfindung ein Verfahren zur Lüftung eines Raums mittels eines Raumlüfters, bei dem die Anwesenheit von Personen bestimmt und der Lüfter in Abhängigkeit der Anwesenheit von Personen gesteuert/aktiviert wird.

Steuerungen der genannten Art sind prinzipiell bekannt. Beispielsweise offenbart die EP 1 418 555 A1 dazu einen Präsenzmelder mit einem Passiv-Infrarotsensor zur Detektion der Anwesenheit von Personen in einem Raum und einen im sichtbaren Spektralbereich arbeitenden Bildsensor sowie einen Prozessor für die lokale und kombinierte Auswertung der Sensorsignale. Der Präsenzmelder kann für die bedarfsgerechte Betätigung und/oder Steuerung von Konditionierungseinrichtungen eines Raumes, insbesondere zur Lüftung und/oder Klimatisierung, verwendet werden. Aus Energiespargründen wird die Lüftung nur dann aktiviert, wenn auch tatsächlich Personen im Raum anwesend sind.

Weiterhin offenbaren die DE 202 16 334 U1 und die DE 3223424 A1 Lüftersteuerungen, welche die Raumlüftung basierend auf Temperaturmessungen, Messungen der Luftfeuchtigkeit, sowie basierend auf Messung der CO₂-Konzentration und Spurengas-Konzentration vornehmen.

Trotz aller Versuche und Maßnahmen werden die bekannten Raumlüftungen von den Benutzern der Räume oft als störend empfunden. Die Bemühungen, ein angenehmes Raumklima zu schaffen gehen damit ins Leere.

Eine Aufgabe der Erfindung ist es daher, eine verbesserte Steuerung für einen Raumlüfter, ein verbessertes Lüftungssystem sowie ein verbessertes Fenster anzugeben. Insbesondere soll die Lüftung ein angenehmes Raumklima schaffen, ohne auf die Benützer des Raumes störend zu wirken.

Die Aufgabe der Erfindung wird durch eine die Steuerung der eingangs genannten Art gelöst, welche dazu eingerichtet ist, die maximale Lüfterleistung nur dann einzustellen, wenn im Bereich des Lüfters, insbesondere im gesamten Raum, keine anwesenden Personen festgestellt werden.

Die Aufgabe der Erfindung wird auch mit einem Lüftungssystem gelöst, welches einen Raumlüfter und einer damit verbundenen Steuerung der genannten Art umfasst, insbesondere wenn der Raumlüfter und die Steuerung dazu eingerichtet sind, eine Luftaustrittsgeschwindigkeit von mehr als 0,1 m/s zu bewirken.

Die Aufgabe der Erfindung wird auch mit einem Fenster gelöst, welches einen Raumlüfter mit einer daran verbundenen Steuerung der oben genannten Art umfasst, insbesondere wenn der Raumlüfter und die Steuerung dazu eingerichtet sind, eine Luftaustrittsgeschwindigkeit von mehr als 0,1 m/s zu bewirken.

Schließlich wird die Aufgabe der Erfindung auch mit einem Verfahren der eingangs genannten Art gelöst, bei dem, die maximale Lüfterleistung nur dann eingestellt wird, wenn im Bereich des Lüfters keine anwesenden Personen festgestellt werden.

Während bekannte Lüftersteuerungen bei steigender Anzahl der Personen in einem Raum von einem erhöhten Bedarf an Belüftung ausgehen, verfolgt die vorliegende Erfindung einen gegensätzlichen Ansatz. Die maximale Lüfterleistung wird nur dann eingestellt, wenn niemand im Bereich des Lüfters beziehungsweise im Raum anwesend ist. Diese Vorgehensweise erscheint paradox, wird doch die Luft immer schlechter, je mehr Personen in einem Raum anwesend sind. Allerdings hat nicht nur die Qualität der Luft einen entscheidenden Einfluss auf das Raumklima, sondern auch die Tatsache, ob die Luft bewegt ist oder nicht. Viele Personen sind sehr anfällig auf Zugluft und können bei Zug ernsthaft erkranken. Im Sinne des geringsten Risikos ist diesen Personen eher schlechte Luft zuzumuten als übermäßige Zugluft. Des Weiterhin kann die Schallemission einer mit hoher Leistung laufender Lüftung als störend empfunden werden. Steuerungen bekannter Art nehmen auf diesen Umstand keine Rücksicht. Die vorgestellte Steuerung nutzt dagegen vorwiegend Zeiträume, in denen die Personen den Raum verlassen, beispielsweise um das WC aufzusuchen, während Sitzungspausen oder wenn Hotelgäste ihr Zimmer verlassen, um ihren Geschäften nachzugehen oder ihren Urlaub zu verbringen.

Dadurch, dass die maximale Lüfterleistung nur dann eingestellt wird, wenn sich niemand im Bereich des Lüfters beziehungsweise im Raum befindet, können auch Luftaustrittsgeschwindigkeiten erreicht werden, welche über gesetzlichen Grenzwerten für die Belüftung von durch Personen benutzten Räumen liegen und/oder über Werten, die als angenehm empfunden werden. Vorteilhaft kann die Luftaustrittsgeschwindigkeit somit auch über 0,1 m/s, 0,5 m/s, 1 m/s oder 2 m/s liegen.

Weitere vorteilhafte Ausgestaltungen und Weiterbildungen der Erfindung ergeben sich aus den Unteransprüchen sowie aus der Beschreibung in Zusammenschau mit den Figuren.

Vorteilhaft ist es, wenn die Mittel zur Bestimmung der Anwesenheit von Personen durch einen Bilderfassungssensor und/oder einen Passiv-Infrarot-Sensor gebildet sind. Bilderfassungssensoren und/oder Passiv-Infrarot-Sensoren werden seit langem für die Anwesenheitserkennung von Personen im Erfassungsbereich der genannten Sensoren eingesetzt und bilden daher leicht verfügbare und dennoch verlässliche Mittel zur Bestimmung der Anwesenheit von Personen. Die Verwendung von Bilderfassungssensoren und/oder Passiv-Infrarot-Sensoren für die Lüftersteuerung ist insbesondere auch dann von Vorteil, wenn der Lüfter in ein Fenster eingebaut ist. Dies deswegen, weil Fenster in aller Regel in Richtung der Raummitte ausgerichtet sind und der Erfassungsbereich der genannten Sensoren in vorteilhafter Weise dann ebenfalls in Richtung der Raummitte ausgerichtet ist. Zudem ist die Sicht auf ein Fenster in aller Regel nicht durch Gegenstände verstellt, weswegen auch den genannten Sensoren die ungehinderte Sicht in den Raum möglich ist. Dies im Gegensatz zu Raumlüftern, welche in der Wand und häufig in einer Ecke des Raumes montiert sind, von wo aus der Raum nicht oder nur unzureichend erfasst werden kann.

Vorteilhaft ist es auch, wenn die Mittel zur Bestimmung der Anwesenheit von Personen durch einen Helligkeitssensor gebildet sind. Auf diese Weise kann die Anwesenheit von Personen indirekt dadurch festgestellt werden, dass die Raumbeleuchtung ein- oder ausgeschaltet ist.

Diese Steuerungsvariante ist dann besonders verlässlich, wenn die Raumbeleuchtung automatisch, das heißt durch einen Präsenzmelder wie zum Beispiel einen Bilderfassungssensor und/oder einen Passiv-Infrarot-Sensor gesteuert wird. In diesem Fall kann davon ausgegangen werden, dass die Raumbeleuchtung - wenngleich auch mit einer zeitlichen Verzögerung beim Ausschalten - als "Statusmeldung" für die Anwesenheit von Personen betrachtet werden kann. Ein gesonderter Bilderfassungssensor und/oder ein Passiv-Infrarot-Sensor ist für die Lüftersteuerung daher nicht unbedingt erforderlich.

Günstig ist es, wenn die Steuerung dazu eingerichtet ist, den Raumlüfter für eine Luftaustrittsgeschwindigkeit von maximal 0,5 m/s einzustellen, wenn Personen im Bereich des Lüfters beziehungsweise im Raum festgestellt werden. Dadurch werden Luftaustrittsgeschwindigkeiten eingestellt, welche durch die Benutzer noch als angenehm empfunden werden und/oder welche unterhalb gesetzlicher Grenzwerte für die Belüftung von durch Personen benutzten Räumen liegen. Vorteilhaft kann die Luftaustrittsgeschwindigkeit auch unter 0,25 m/s oder 0,1 m/s liegen.

In einer weiteren vorteilhaften Variante umfasst die Steuerung einen Temperatursensor und/oder einen Feuchtigkeitssensor und/oder einen CO₂-Sensor und/oder einen Sensor zur Messung flüchtiger organischer Verbindungen. Insbesondere kann der genannte Sensor oder können die genannten Sensoren im Strömungsbereich des Raumlüfters angeordnet sein. Ist die Raumlüftung so eingebaut, dass sie verbrauchte Luft aus dem Raum absaugt, so kann auf diese Weise die Qualität der Raumluft ermittelt und die Lüftung anhand der festgestellten Luftqualität eingestellt werden. Bei zunehmender Erreichung einer optimalen Luftqualität kann die Lüfterleistung sukzessive reduziert werden. Selbstverständlich sind aber auch Ein-Aus-Steuerungen möglich. In diesem Fall wird die Maximalleistung des Lüfters im Sinne der Erfindung einfach durch Einschalten desselben erreicht.

Wird festgestellt, dass die Luft immer schlechter wird, so kann dies auch daran liegen, dass (noch schlechtere) Luft aus einem benachbarten Raum (beispielsweise einem verrauchten Gang) angesaugt wird, insbesondere wenn keine Personen im Raum festgestellt werden. In diesem Fall ist es von Vorteil die Lüftung zu reduzieren, einzustellen oder die Strömungsrichtung umzukehren, sodass Frischluft von außen angesaugt wird. Natürlich gilt auch in diesem Fall, dass die Lüftung nur dann sinnvoll ist, wenn die angesaugte Luft von besserer Qualität ist. Durch Umkehrung der Strömungsrichtung können somit mit einem Satz von Sensoren sowohl die Raumluft als auch die Außenluft gemessen und daraufhin die eigentliche Lüftung gesteuert werden. Selbstverständlich ist es auch möglich, die Lüftung immer wieder zu unterbrechen respektive die Strömungsrichtung umzukehren, um die Luftqualität beidseits des Lüfters messen zu können. Eventuell wäre auch die Anwendung einer Überdrucksteuerung sinnvoll. Insbesondere kann eine Strömungsumkehr nämlich auch nachteilige Effekte haben, beispielsweise wenn befürchtet werden muss, dass Bakterien, Viren, Sporen und andere Mikroorganismen aus den Abluftkanälen in den Raum geblasen werden könnten.

Günstig ist es aber auch, wenn der genannte Sensor oder die genannten Sensoren im Zuluftbereich und/oder Abluftbereich des Raums angeordnet ist/sind. Auf diese Weise kann die Luftqualität innerhalb des Raums und außerhalb des Raums auch dann gemessen werden, wenn die Lüftung deaktiviert ist. Durch zuluftseitige Messung vor einer eventuelle Aktivierung der Lüftung kann verhindert werden, dass schlechte Luft in den Raum gesaugt wird. Durch abluftseitige Messung kann festgestellt werden, ob die Raumluft von hinreichender Qualität ist.

Günstig ist es schließlich, wenn die Steuerung dazu eingerichtet ist, den Schließzustand des Fensters zu erfassen und den Raumlüfter auszuschalten, wenn das Fenster geöffnet ist. Auf diese Weise wird vermieden, dass für den Raumlüfter unnötig Energie verbraucht wird, da eine Lüftung ohnehin über das Fenster erfolgt.

Ergänzend wird angemerkt, dass die zur Steuerung offenbarten Varianten und daraus resultierenden Vorteile gleichermaßen auf das Lüftungssystem und das Fenster anwendbar sind und umgekehrt.

Zum besseren Verständnis der Erfindung wird diese anhand der nachfolgenden Figur näher erläutert. Es zeigt:

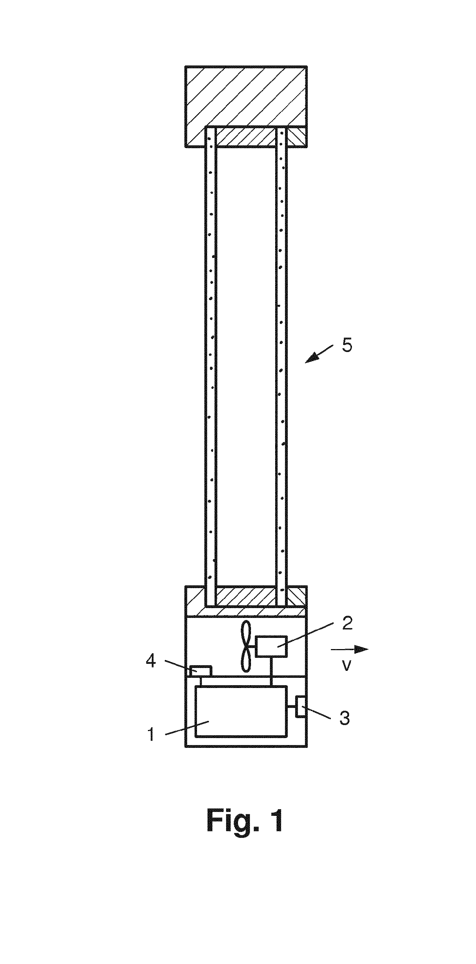

- Fig. 1: einer schematisch dargestellten Querschnit durch ein beispielhaftes Fenster mit einer eingebauten Lüftung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

Fig. 1 zeigt eine Steuerung 1 für einen Raumlüfter 2, umfassend Mittel 3 zur Bestimmung der Anwesenheit von Personen (Präsenzmelder). Weiterhin ist die Steuerung 1 mit einem im Strömungsbereich des Raumlüfters 2 angeordneten Temperatursensor 4 verbunden. Vorzugsweise sind die genannten Komponenten 1..4 wie in der Fig. 1 dargestellt in ein Fenster 5 integriert.

Die Steuerung 1 ist dazu eingerichtet, die maximale Lüfterleistung nur dann einzustellen, wenn im Bereich des Lüfters 2, insbesondere im gesamten Raum, keine anwesenden Personen festgestellt werden. Vorzugsweise kann die Luftaustrittsgeschwindigkeit v dann auch über gesetzlichen Grenzwerten für die Belüftung von durch Personen benutzten Räumen liegen und/oder über Werten, die als angenehm empfunden werden. Diese Luftaustrittsgeschwindigkeiten v liegen insbesondere über 0,1 m/s, 0,5 m/s, 1 m/s oder 2 m/s.

Konkret sind die Mittel zur Bestimmung der Anwesenheit von Personen in diesem Beispiel durch einen Passiv-Infrarot-Sensor 3 (PIR-Sensor) gebildet. Alternativ oder zusätzlich kann auch ein Bilderfassungssensor für die Bestimmung der Anwesenheit von Personen vorgesehen sein. Dieser kann die Anwesenheit von Personen beispielsweise durch Vergleich von Bildern feststellen, die zu verschiedenen Zeitpunkten aufgenommen worden sind.

Passiv-Infrarot-Sensoren werden seit langem für die Anwesenheitserkennung von Personen eingesetzt. Die Verwendung eines Passiv-Infrarot-Sensors 3 für die Lüftersteuerung 1 ist insbesondere dann von Vorteil, wenn der Lüfter 2 wie in Fig. 1 dargestellt in ein Fenster 5 eingebaut ist. Generell ist ein Fenster mit eingebautem Lüfter beispielsweise aus der Österreichischen Patentanmeldung A 1718/2011 der Anmelderin bekannt.

Ein Fenster 5 ist in aller Regel in Richtung der Raummitte ausgerichtet, wodurch der Erfassungsbereich des PIR-Sensors 3 in vorteilhafter Weise ebenfalls in Richtung der Raummitte ausgerichtet ist. Zudem ist die Sicht auf ein Fenster 5 in aller Regel nicht durch Gegenstände verstellt, weswegen dem PIR-Sensor 3 die ungehinderte Sicht in den Raum möglich ist. Das oben Gesagte gilt natürlich auch sinngemäß für Bilderfassungssensoren.

Alternativ zu Bilderfassungssensoren und/oder Passiv-Infrarot-Sensoren 3 können die Mittel zur Bestimmung der Anwesenheit von Personen auch durch einen Helligkeitsensor gebildet sein, der beispielsweise im Bereich des in der Fig. 1 dargestellten PIR-Sensors 3 angeordnet ist. Auf diese Weise kann die Anwesenheit von Personen indirekt dadurch festgestellt werden, dass die Raumbeleuchtung ein- oder ausgeschaltet ist. Diese Steuerungsvariante ist dann besonders verlässlich, wenn die Raumbeleuchtung automatisch von einer dafür vorgesehenen Steuerung gesteuert wird, weil die Raumbeleuchtung dann den Belegungszustand des Raums widerspiegelt. Ein gesonderter Bilderfassungssensor und/oder ein Passiv-Infrarot-Sensor 3 ist für die Lüftersteuerung 1 in diesem Fall nicht unbedingt erforderlich.

Vorteilhaft stellt die Steuerung 1 den Raumlüfter 2 für eine Luftaustrittsgeschwindigkeit v von maximal 0,5 m/s ein, wenn Personen im Bereich des Lüfters beziehungsweise im Raum festgestellt werden. Dies sind Luftaustrittsgeschwindigkeiten v, welche durch die Benutzer des Raums noch als angenehm empfunden werden und/oder welche unterhalb gesetzlicher Grenzwerte für die Belüftung von durch Personen benutzten Räumen liegen. Vorteilhaft kann die Luftaustrittsgeschwindigkeit v aber auch unter 0,25 m/s oder 0,1 m/s liegen.

Mit Hilfe des Temperatursensors 4 steht der Steuerung 1 neben dem Besetztzustand (Personen anwesend oder nicht) ein weiterer Parameter für die Beeinflussung des Raumlüfters 2 zur Verfügung. Beispielsweise ist es nicht unbedingt sinnvoll, im Sommer warme Außenluft in einen klimatisierten Raum zu blasen. Umgekehrt ist es auch nicht unbedingt sinnvoll, im Winter kalte Luft in einen beheizten Raum zu blasen. Zur Vermeidung ungewollter Effekte, kann in die Steuerung des Lüfters 2 daher auch die Tageszeit und/oder die Jahreszeit mit einbezogen werden. Demgemäß wird der Lüfter 2 in einer bevorzugten Variante im Sommer bei gegenüber dem Raum kühler Außenluft aktiviert, wohingegen er in derselben Situation im Winter deaktiviert bleibt.

Denkbar ist natürlich auch, den Raumlüfter 2 mit Wärmetauschern auszustatten, wodurch Zuluft mit warmer/kühler Abluft erwärmt/gekühlt werden kann, insbesondere im Gegenstromprinzip. Eine Nachtauskühlung im Sommer wäre beispielsweise mit einem Bypass oder der durch Nutzung nur eines Kanales des Raumlüfters 2 möglich.

Zusätzlich zum Temperatursensor 4 oder alternativ dazu können auch andere Sensoren im Strömungsbereich des Raumlüfters 2 angeordnet sein, beispielsweise ein Feuchtigkeitssensor und/oder ein CO₂-Sensor und/oder ein Sensor zur Messung flüchtiger organischer Verbindungen. Auf diese Weise kann die Qualität der Raumluft noch besser beurteilt und die Lüftung anhand der festgestellten Luftqualität eingestellt werden. Bei zunehmender Erreichung einer optimalen Luftqualität kann die Lüfterleistung sukzessive reduziert werden. Selbstverständlich sind aber auch Ein-Aus-Steuerungen möglich.

Durch Umkehrung der Strömungsrichtung des Raumlüfters 2 können mit einem Satz von Sensoren zudem sowohl die Raumluft als auch die Außenluft gemessen und die ermittelten Messwerte für die Lüftungssteuerung herangezogen werden. Selbstverständlich ist es auch möglich, eine Lüftung immer wieder zu unterbrechen und die Strömungsrichtung der Lüftung umzukehren, um die Luftqualität quasi laufend innerhalb und außerhalb des Raums zu messen.

Prinzipiell kann das Lüftungssystem so ausgelegt sein, dass der Raum belüftet wird oder entlüftet wird. Von Vorteil ist es aber, wenn das Lüftungssystem den Raum sowohl belüften als auch entlüften kann. Wird zum Beispiel festgestellt, dass aus dem Raum abgesaugte Luft immer schlechter wird, so kann die Strömungsrichtung umgekehrt werden, sodass der Raum mit Frischluft von außen belüftet wird. Natürlich gilt auch in diesem Fall, dass die Lüftung nur dann sinnvoll ist, wenn die angesaugte Luft von besserer Qualität ist. Ist dies auch nicht der Fall, so kann die Lüftung auch ganz eingestellt werden.

In der Fig. 1 ist der Temperatursensor 4 (respektive auch andere Sensoren zur Messung der Luftqualität) im Strömungsbereich des Lüfters 2 angeordnet. Dies ist aber nicht zwingend erforderlich. Der genannte Sensor 4 oder die genannten Sensoren können auch im Zuluftbereich und/oder Abluftbereich des Raums angeordnet sein, beispielsweise in einem vom Lüftungssystem entfernten Lüftungsrohr. Auf diese Weise kann die Luftqualität innerhalb des Raums und außerhalb des Raums auch dann gemessen werden, wenn der Lüfter 2 deaktiviert ist. Durch zuluftseitige Messung vor einer eventuelle Aktivierung der Lüftung kann verhindert werden, dass schlechte Luft in den Raum gesaugt wird. Durch abluftseitige Messung kann festgestellt werden, ob die Raumluft von hinreichender Qualität ist.

In einer vorteilhaften Variante ist die Steuerung 1 überdies dazu eingerichtet, den Schließzustand des Fensters 5 zu erfassen und den Raumlüfter 2 auszuschalten, wenn das Fenster 5 geöffnet ist. Auf diese Weise wird vermieden, dass für den Raumlüfter 2 unnötig Energie verbraucht wird, da eine Lüftung ohnehin über das Fenster 5 erfolgt. Der Schließzustand des Fensters 5 kann in an sich bekannter Weise durch beispielsweise Schaltkontakte oder Magnetkontakte (nicht dargestellt) ermittelt werden.

Es kann auch eine weitere Logik vorhanden sein, bei welcher der Lüfter 2 so lange läuft, bis bei steigender Temperatur ein Schwellwert für die Außentemperatur erreicht ist und der Lüfter 2 danach abgeschaltet wird. Der genannte Schwellwert wird dabei so bestimmt, dass es wahrscheinlich ist, dass Person im Raum aufgrund der Hitze das Fenster 5 ohnehin öffnen.

Weiterhin kann auch vorgesehen sein, dass der Lüfter 2 manuell nicht abgeschaltet werden kann. Zum Beispiel ist dies für Wohnungsgenossenschaften oder in einem Hotel von Bedeutung, wo leider davon ausgegangen werden muss, dass die Benutzer nicht zwangsläufig auf den Werterhalt der Immobilien bedacht sind und die Räumlichkeiten regelmäßig lüften, um Schimmelbildung und andere Feuchteschäden zu vermeiden. Die vorgestellte Steuerung 1 für den Raumlüfter 2 kann Schimmelbildung insbesondere dann verhindern, wenn der Lüfter 2 manuell nicht abschaltbar ist.

Eine Möglichkeit wäre auch, eine von der Außentemperatur abhängige Abschaltsperre vorzusehen. Liegt die Außentemperatur beispielsweise im 24h-Mittel unter rund 12°C, so kann ein manuelles Abschalten des Gerätes blockiert werden. Die Temperatur von 12°C ist an die Mindestoberflächentemperatur der Innenwand für einen wirksamen Feuchteschutz angelehnt. Ist die Außentemperatur höher als 12°C, so kann sich an der Innenwand in der Regel kein Kondensat bilden.

Obwohl die Fig. 1 eine vorteilhafte Einbausituation für das die Steuerung 1 und den Lüfter 2 umfassende Lüftungssystem zeigt, kann das genannte Lüftungssystem natürlich auch an anderer Stelle eingebaut sein, beispielsweise in einer Wand des Raums oder in eine Tür. Die offenbarten Varianten und daraus resultierenden Vorteile sind uneingeschränkt auch auf Einbausituationen anwendbar, die von der in der Fig. 1 dargestellten Situation abweichen.

Insbesondere wird an dieser Stelle auch angemerkt, dass der in Fig. 1 dargestellte Lüfter 2 lediglich Symbolcharakter hat und die Bauweise des Lüfters 2 keineswegs auf Axiallüfter eingeschränkt ist. Wenngleich ein Vorteil des Axialgebläses dadurch gegeben ist, dass die Strömungsrichtung durch Umkehrung der Drehrichtung geändert werden kann, sind selbstverständlich auch Radialgebläse in Kombination mit der Steuerung 1 einsetzbar. Eine Umkehrung der Strömungsrichtung kann dann beispielsweise durch entsprechende Klappen bewerkstelligt werden.

Weiterhin wird angemerkt, dass die Erfindung nicht auf eine Steuerung im regelungstechnischen Sinn eingeschränkt ist (open loop control), sondern auch Regelungen (closed loop control) zu den oben genannten Zwecken einsetzbar sind. Beispielsweise kann die Drehzahl des Lüfters 2 anhand eines Parameters für die Luftqualität (z.B. Temperatur, Luftfeuchtigkeit, CO₂-Konzentration, usw.) geregelt sein. Folgende Tabelle zeigt beispielhafte Schwellwerte des CO₂-Gehalts der Luft in ppm (parts per million) zur Ansteuerung verschiedener Leistungsstufen für den Lüfter 2 in Abhängigkeit davon, ob Personen im Raum anwesend sind oder nicht

| | Aus | Stufe 1 | Stufe 2 | Stufe 3 |
|---|---|---|---|---|
| Anwesend | 600 | 800 | 1200 | 1500 |
| Abwesend | 400 | 500 | 700 | 800 |

Die Ausführungsbeispiele zeigen mögliche Ausführungsvarianten einer erfindungsgemäßen Steuerung 1 für einen Raumlüfter 2, eines erfindungsgemäßen Lüftungssystems und eines erfindungsgemäßen Fensters 5, wobei an dieser Stelle bemerkt sei, dass die Erfindung nicht auf die speziell dargestellten Ausführungsvarianten eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

Insbesondere wird festgehalten, dass die dargestellten Vorrichtungen in der Realität auch mehr oder weniger Bestandteile als dargestellt umfassen können.

Der Ordnung halber sei abschließend darauf hingewiesen, dass das Lüftungssystem und das Fenster 5 sowie deren Bestandteile zum besseren Verständnis ihres Aufbaus teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

### Bezugszeichenaufstellung

- 1: Steuerung
- 2: Lüfter
- 3: Präsenzmelder
- 4: Temperatursensor
- 5: Fenster

- v: Strömungsgeschwindigkeit

## Patentansprüche

1. Steuerung (1) für einen Raumlüfter (2), umfassend Mittel (3) zur Bestimmung der Anwesenheit von Personen, **dadurch gekennzeichnet, dass** die Steuerung (1) dazu eingerichtet ist, die maximale Lüfterleistung nur dann einzustellen, wenn im Bereich des Lüfters (2) keine anwesenden Personen festgestellt werden.

2. Steuerung (1) nach Anspruch 1, **dadurch gekennzeichnet, dass** die Mittel (3) zur Bestimmung der Anwesenheit von Personen durch einen Bilderfassungssensor und/oder einen Passiv-Infrarot-Sensor gebildet sind.

3. Steuerung (1) nach Anspruch 1 oder 2, **dadurch gekennzeichnet, dass** die Mittel (3) zur Bestimmung der Anwesenheit von Personen durch einen Helligkeitssensor gebildet sind.

4. Steuerung (1) nach einem der Ansprüche 1 bis 3, **dadurch gekennzeichnet, dass** diese dazu eingerichtet ist, den Raumlüfter (2) für eine Luftaustrittsgeschwindigkeit (v) von maximal 0,5 m/s einzustellen, wenn Personen im Bereich des Lüfters festgestellt werden.

5. Steuerung (1) nach einem der Ansprüche 1 bis 4, **gekennzeichnet durch** einen Temperatursensor (4) und/oder einen Feuchtigkeitssensor und/oder einen CO₂-Sensor und/oder einen Sensor zur Messung flüchtiger organischer Verbindungen.

6. Steuerung (1) nach Anspruch 5, **dadurch gekennzeichnet, dass** der genannte Sensor (4) oder die genannten Sensoren im Strömungsbereich des Raumlüfters (2) angeordnet ist/sind.

7. Steuerung (1) nach Anspruch 5 oder 6, **dadurch gekennzeichnet, dass** der genannte Sensor (4) oder die genannten Sensoren im Zuluftbereich und/oder Abluftbereich des Raums angeordnet ist/sind.

8. Lüftungssystem, **gekennzeichnet durch** einen Raumlüfter (2) und eine damit verbundene Steuerung (1) nach einem der Ansprüche 1 bis 7.

9. Lüftungssystem nach Anspruch 8, **dadurch gekennzeichnet, dass** der Raumlüfter (2) und die Steuerung(1) dazu eingerichtet sind, eine Luftaustrittsgeschwindigkeit (v) von mehr als 0,1 m/s zu bewirken.

10. Fenster (5), umfassend einen Raumlüfter (2) mit einer damit verbundenen Steuerung (1) nach einem der Ansprüche 1 bis 7.

11. Fenster (5) nach Anspruch 10, **dadurch gekennzeichnet, dass** der Raumlüfter (2) und die Steuerung (1) dazu eingerichtet sind, eine Luftaustrittsgeschwindigkeit (v) von mehr als 0,1 m/s zu bewirken.

12. Fenster (5) nach Anspruch 10 oder 11, **dadurch gekennzeichnet, dass** die Steuerung (1) dazu eingerichtet ist, den Schließzustand des Fensters (5) zu erfassen und den Raumlüfter (2) auszuschalten, wenn das Fenster (5) geöffnet ist.

13. Verfahren zur Lüftung eines Raums mittels eines Raumlüfters (2), bei dem die Anwesenheit von Personen bestimmt wird und der Lüfter (2) in Abhängigkeit der Anwesenheit von Personen gesteuert/aktiviert wird, **dadurch gekennzeichnet, dass** die maximale Lüfterleistung nur dann eingestellt wird, wenn im Bereich des Lüfters (2) keine anwesenden Personen festgestellt werden.
